# EUROPEAN PATENT APPLICATION

(11) **EP 1 443 191 A2**
(43) Date of publication of application: **04.08.2004**
(21) Application number: 03025396.7
(22) Date of filing: 05.11.2003
(51) Int. Cl.: F02D 9/10

(54) **Throttling valve**

(30) Priority: 03.02.2003 JP 2003025928
(71) Applicant: AISAN KOGYO KABUSHIKI KAISHA, Obu-shi, Aichi-ken 474-8588 (JP)
(72) Inventor: Arakawa, Shigeru, Obu-shi Aichi-ken 474-8588 (JP); Ohara, Takuya, Obu-shi Aichi-ken 474-8588 (JP); Suzuki, Takio, Obu-shi Aichi-ken 474-8588 (JP)
(74) Representative: Kramer - Barske - Schmidtchen

(57) **Abstract**

A valve apparatus is provided with a case 11 receiving a valve 12, and a body 2 forming fluid passages 24, 25, 26, and 27, as independent constituting elements, the case 11 is received in a case receiving portion 23 of the body 2, and a ceiling portion 11a of the case 11 is fixed to a case mounting surface 23a of the case receiving portion 23 by fastening devices 5, 6, 7, and 8, whereby the case 11 and the body 2 are integrally structured.

## Description

### 2. Background of the Invention

### (1) Field of the Invention

The present invention relates to a valve apparatus, and more particularly to a valve apparatus which can be applied to a control valve in an intake system and an exhaust system of an internal combustion engine, or the like.

### (2) Description of the Prior Art

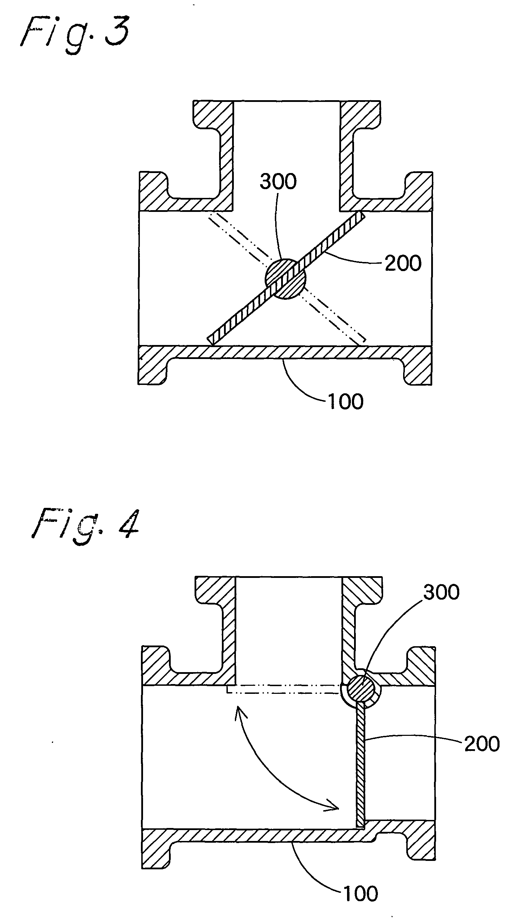

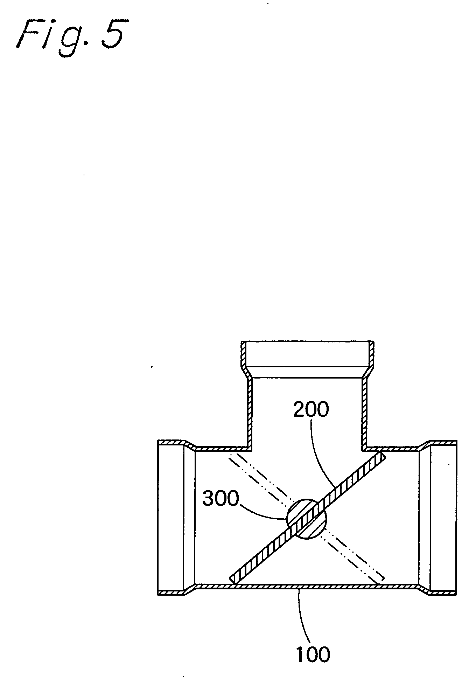

In a conventional valve apparatus, for example, as shown in Figs. 3 and 4, a body 100 is constituted by a thick cast metal, or as shown in Fig. 5, the body 100 is constituted by a thin pipe. In this case, in Figs. 3, 4 and 5, reference numeral 200 denotes a valve and reference numeral 300 denotes a shaft, respectively.

However, in the case of the cast metal body mentioned above, since it is easy to secure a rigidity and a surface accuracy, the body is excellent in a valve performance (a sealing property of the body), but there is a problem that a weight thereof is heavy. Further, in the case of the pipe body mentioned above, although a light weight is achieved, it is hard to secure the rigidity and the surface accuracy due to the thin wall, so that there is a problem that the body is inferior in the valve performance. Further, when welding a pipe, for example, an end portion of an exhaust pipe of the internal combustion engine or the like to an end portion of the body, a heat tends to be transmitted to a peripheral portion of the pipe from the end portion of the body due to an integral structure of the body, and there is a problem that the valve performance tends to be deteriorated due to a thermal deformation of the peripheral portion of the valve.

### 3. Summary of the Invention

An object of the present invention is to provide a novel valve apparatus which can improve a valve performance by securing a rigidity and a surface accuracy of a peripheral portion of a valve while solving the problems of the conventional valve apparatus as mentioned above and intending to achieve a weight saving of an entire of the apparatus.

In accordance with the present invention, there is provided a valve apparatus comprising:
a case receiving a valve; and
a body forming a fluid passage, the body being independently provided from the case as an independent constituting element,
characterized in that the case is received in a case receiving portion of the body, and a ceiling portion of the case is fixed to a case mounting surface of the case receiving portion in the body by a fastening device, whereby the case and the body are integrally formed.

In accordance with the valve apparatus in accordance with the present invention, since the case and the body are set as the independent constituting elements, it is possible to structure the case by a molded body such as a cast metal, and it is possible to structure the body by a sheet metal or a thin molded body. In the molded body such as the cast metal or like, since it is easy to secure the rigidity and the surface accuracy, it is possible to secure the valve performance. Further, since the body forms the fluid passage and has no direct relation to the valve performance, it is possible to achieve a weight saving of the body by structuring the body by a sheet metal or a thin molded body. Further, a welding heat in the end portion of the body is transmitted to the case from the body, however, since the body is independently provided from the case, the heat is hard to be transmitted to the case in comparison with the integrally formed structure, a heat deformation is hard to be generated near the valve, and it is possible to secure the valve performance. Further, since the case and the body are integrated by fixing the ceiling portion of the case to the case mounting surface of the case receiving portion by the fastening device, the case can be easily detached from the body in accordance with a simple operation such as loosening the fastening device.

In particular, the case has four ports, the body has fluid passages respectively communicating with four ports of the case, and a communication state among four ports is changed in three modes in correspondence to three rotation positions of the valve.

Further, in accordance with the present invention, there is provided a valve apparatus, characterized in that a gasket is inserted between the case ceiling portion and the case mounting surface, and another gasket is inserted between an inner surface of the case receiving portion and an outer surface of the case, whereby a sealing property between the adjacent fluid passages is secured. Accordingly, it is possible to prevent the fluid from leaking from the inner portion of the valve apparatus to the external portion, and it is possible to prevent the fluid from leaking between the fluid passages.

### 4. Brief Description of the Drawings

Fig. 1 is an exploded perspective view of a valve apparatus in accordance with one embodiment of the present invention;
Fig. 2 is a cross sectional view of the valve apparatus;
Fig. 3 is a cross sectional view of a conventional valve apparatus;
Fig. 4 is a cross sectional view of another conventional valve apparatus; and
Fig. 5 is a cross sectional view of the other conventional valve apparatus.

### 5. Description of the Preferred Embodiments

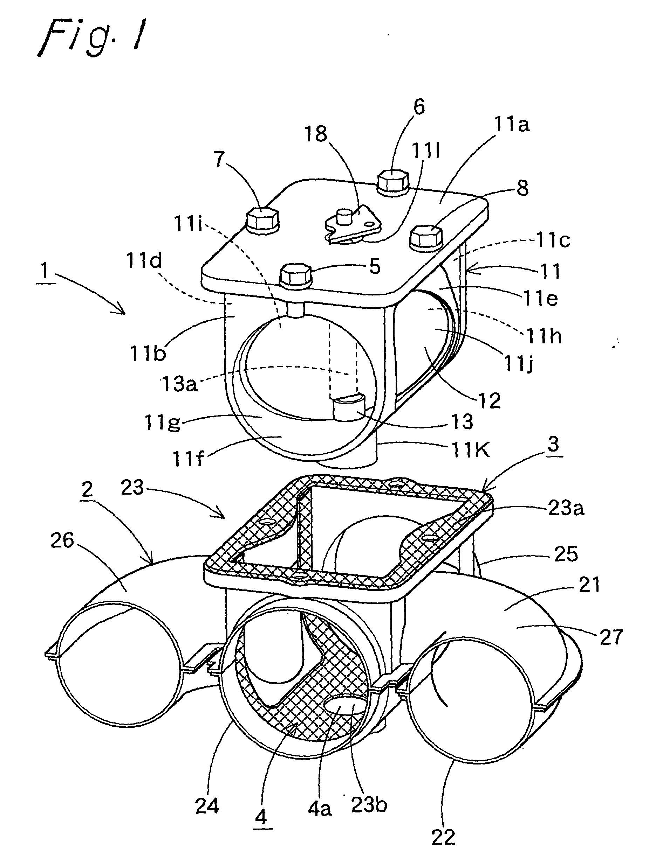

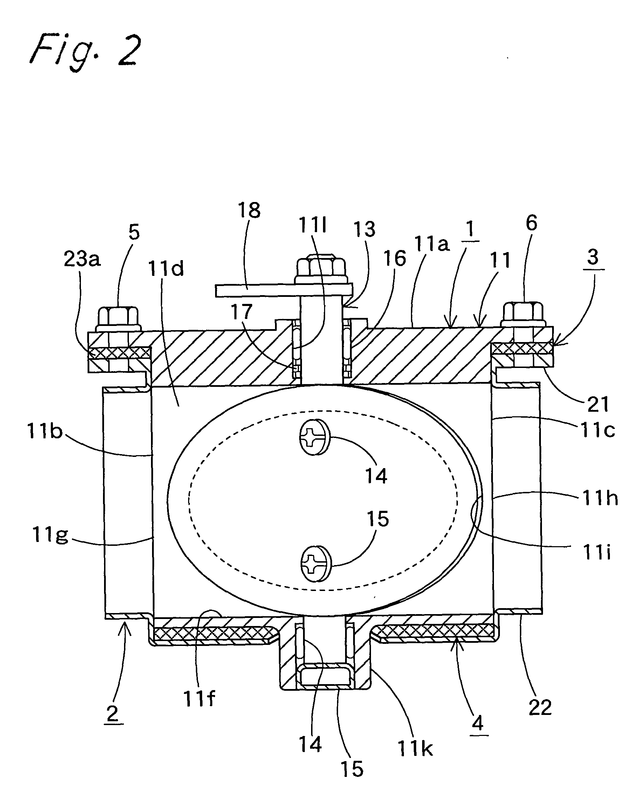

Fig. 1 is an exploded perspective view of a valve apparatus in accordance with one embodiment of the present invention, and Fig. 2 is a cross sectional view of the valve apparatus. In this case, an up and down direction in Figs. 1 and 2 does not alwayscoincidewithaverticaldirection, however, the following description is given on the basis of the up and down direction in the drawings.

In Figs. 1 and 2, a valve apparatus is provided with a valve assembly 1, a body 2 and two gaskets 3 and 4.

The valve assembly 1 has a case 11, a valve 12 and a shaft 13 as constituting elements.

The case 11 is constituted by a molded body such as a cast metal or the like. The case 11 has a flat ceiling portion 11a, two flat side wall portions 11b and 11c opposing in a longitudinal direction, two curved side wall portions 11d and 11e opposing in a lateral direction, and a curved floor portion 11f. Ports 11g, 11h, 11i and 11j are respectively formed in four side wall portions 11b, 11c, 11d and 11e.

The valve 12 is integrally formed with the shaft 13 by aligning a center line in the lateral direction with a vertically long groove 13a formed in a center portion of the shaft 13, and fastening two screws 14 and 15, thereby structuring a butterfly valve.

The floor portion 11f of the case 11 has a cylindrical bearing receiving portion 11k protruding to a lower side. The bearing receiving portion 11k receives a bearing 14 which rotatably holds a lower end portion of the shaft 13. An opening portion of the bearing receiving portion 11k is sealed by a sealing plug 15 or forming a closed-end cylinder portion in a through hole of the body 2 which is not illustrated, thereby preventing the fluid from leaking from an inner portion of the case 11 to an external portion. The ceiling portion 11a of the case 11 has a bearing receiving portion 11l penetrating in a vertical direction, and the bearing receiving portion 11l receives a bearing 16 which rotatably holds an upper end portion of the shaft 13. Further, the bearing receiving portion 11l receives a seal member outward fitted to the upper end portion of the shaft 13, and the seal member 17 prevents the fluid from leaking from the inner portion of the case 11 to the external portion. An operating lever 18 connected to a cable (not shown) and rotating the shaft 13 by being operated by the cable is fixed to the upper end portion of the shaft 13 protruding to an upper side from the ceiling portion 11a of the case 11.

The body 2 is constituted by an upper half body 21 and a lower half body 22 which are separated into two pieces in a vertical direction, and is integrally formed by welding mating faces between the upper half body 21 and the lower half body 22. The upper half body 21 and the lower half body 22 are each made of a sheet metal or a thin molded body. A center portion of the body 2 forms a case receiving portion 23 which is open to an upper side and has a space corresponding to a shape formed by outer surfaces of the floor portion 11f and four side wall portions 11b, 11c, 11d and 11e in the case 11, and an upper end of the case receiving portion 23 structures a case mounting surface 23a fixed to an outer peripheral edge portion of a lower surface of the ceiling portion 11a in the case 11 by fastening devices 5, 6, 7 and 8. A plate-shaped gasket 3 constituted by a quadrangular frame is inserted between the case mounting surface 23a and the outer peripheral edge portion of the lower surface of the case ceiling portion 11a, and the gasket 3 prevents the fluid from leaking from the inner portion of the body 2 to the external portion.

Two comparatively shorter fluid passages 24 and 25 extend in a longitudinal direction from the case receiving portion 23, and two comparatively longer fluid passages 26 and 27 curved in an L shape extend in a lateral direction. The fluid passages 24 and 25 in the longitudinal direction are communicated with the ports 11g and 11h of the case 11 in the longitudinal direction, respectively. Further, the fluid passages 26 and 27 in the lateral direction are communicated with the ports 11i and 11j of the case 11 in the lateral direction, respectively. A floor portion of the case receiving portion 23 has a through hole 23b, and the bearing receiving portion 11k of the case floor portion 11f is inserted to the through hole 23b.

One gasket 3 in two gaskets 3 and 4 is inserted between the outer peripheral edge portion of the lower surface of the case ceiling portion 11a and the case mounting surface 23a of the case receiving portion 23 in the body 2, as mentioned above, and secures a sealing property. Another gasket 4 is inserted between an inner surface of the case receiving portion 23 in the body 2 and an outer surface of the case 11. The gasket 4 is formed approximately in an H shape in a plan view under an exploded state, and a through hole 4a to which the bearing receiving portion 11k of the case floor portion 11f is inserted is formed in a center portion of the gasket 4. When mounting the case 11 to the body 2, the gasket 4 secures a sealing property between the adjacent fluid passages 24 and 26, between the adjacent fluid passages 24 and 27, between the adjacent fluid passages 25 and 26, and between the adjacent fluid passages 25 and 27 so as to prevent the fluid leakage between the adjacent fluid passages 24 and 26, between the adjacent fluid passages 24 and 27, between the adjacent fluid passages 25 and 26, and between the adjacent fluid passages 25 and 27 in the body 2.

The valve 12 takes three rotational positions, and selects a first mode for setting the port 11g and the port 11j in a communicated state therebetween and the port 11h and the port 11i in a communicated state therebetween, a second mode for setting the port 11g and the port 11i in a communicated state therebetween and the port 11h and the port 11j in a communicated state therebetween, and a third mode for setting the ports 11g, 11h, 11i and 11j in a communicated state therebetween, respectively in accordance with the respective rotational positions.

The valve apparatus structured in the manner mentioned above keeps the communicated state between the port 11g and the port 11j and between the port 11h and the port 11i, at a time when the valve 12 is in the rotational position shown in Fig. 1. When the operation lever 18 is rotated from this state and the valve 12 is rotated, the communicated state is changed to the third mode and the second mode mentioned above. Thereafter, when the operation lever 18 is rotated in an opposite direction to the rotating operation, the valve 12 is again returned to the rotational position shown in Fig. 1.

As described above, the valve apparatus in accordance with the present invention is provided with the case 11 receiving the valve 12, and the body 2 forming the fluid passages 24, 25, 26 and 27, as the independent constituting elements, the case 11 is received in the case receiving portion 23 of the body 2, and the ceiling portion 11a of the case 11 is fixed to the case mounting surface 23a of the case receiving portion 23 by the fastening devices 5, 6, 7 and 8, whereby the case 11 and the body 2 are integrally formed. Further, the case 11 is structured by the cast metal or the like which can easily secure the rigidity and the surface accuracy, and the body 2 forming the fluidpassages 24, 25, 26 and 27 and having no direct relation to the valve performance is structured by the sheet metal or the thin molded body. Accordingly, it is possible to secure the valve performance and it is possible to achieve a weight saving of an entire of the valve apparatus. Further, a welding heat in the end portion of the body 2 is transmitted to the case 11 from the body 2, however, since the body 2 is independently provided from the case 11, the heat is hard to be transmitted to the case 11 in comparison with the integrally formed structure, a heat deformation is hard to be generated near the valve, and it is possible to secure the valve performance. Further, since the case 11 and the body 2 are integrated by fixing the ceiling portion 11a of the case 11 to the case mounting surface 23a of the case receiving portion 23 by the fastening devices 5, 6, 7 and 8, the case 11 can be easily detached from the body 2 in accordance with a simple operation such as loosening the fastening device 5, 6, 7 and 8.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention.

## Claims

1. A valve apparatus comprising:
a case receiving a valve; and
a body forming a fluid passage, said body being independently provided from the case as an independent constituting element,
**characterized in that** said case is received in a case receiving portion of said body, and a ceiling portion of said case is fixed to a case mounting surface of said case receiving portion by a fastening device, whereby said case and said body are integrally formed.

2. A valve apparatus as claimed in claim 1, **characterized in that** said case is constituted by a molded body such as a cast metal, and said body is constituted by a sheet metal or a thin molded body.

3. A valve apparatus as claimed in claim 2, **characterized in that** said case has four ports, and said body has fluid passages respectively communicating with four ports of said case, and a communication state among four ports is changed in three modes in correspondence to three rotation positions of said valve.

4. A valve apparatus as claimed in claim 3, **characterized in that** a gasket is inserted between said case ceiling portion and said case mounting surface, and another gasket is inserted between an inner surface of the case receiving portion of said body and an outer surface of said case, whereby a sealing property between the adjacent fluid passages is secured.
